# EUROPEAN PATENT SPECIFICATION

(11) **EP 4 081 462 B1**
(45) Date of publication and mention of the grant of the patent: **15.04.2026**
(21) Application number: 20904987.3
(22) Date of filing: 24.12.2020
(51) Int. Cl.: B65D 41/34, B65D 55/02, G06K 19/077, B65D 41/62

(54) **ANTI-COUNTERFEITING SECURITY CAPSULE FOR A CONTAINER**
FÄLSCHUNGSSICHERES KAPSEL FÜR EINEN BEHÄLTER
CAPSULE DE SÉCURITÉ ANTI-CONTREFAÇON POUR RÉCIPIENT

(30) Priority: 24.12.2019 AU 2019904932; 20.09.2020 AU 2020903364
(43) Date of publication of application: 02.11.2022
(73) Proprietor: Enseal Pty Ltd., Auburn, South Australia 5451 (AU)
(72) Inventor: GROSSET, Jeffery, Auburn, South Australia 5451 (AU)
(74) Representative: Basck Limited
(86) International application number: PCT/AU2020/051435
(87) International publication number: WO 2021/127747

(56) References cited:
- DE-U1- 212017 000 222
- US-A1- 2005 162 277
- US-A1- 2005 162 277
- US-A1- 2010 141 384
- US-A1- 2010 141 384
- US-A1- 2012 228 388
- US-A1- 2012 228 388
- US-A1- 2013 240 631
- US-A1- 2013 240 631
- US-B1- 10 399 753
- US-B1- 10 399 753

## Description

### FIELD OF THE INVENTION

The present invention relates to anti-counterfeiting tag structures, and more particularly, to an anti-counterfeiting RFID tag structure integrated into a bottle closure and/or capsule, so as to assist in the prevention and detection of tampering and counterfeiting events.

### BACKGROUND

There are many industries that require the use of anti-counterfeiting tags to provide an increased level of confidence to both consumers and sellers that the contents of a particular package or container is intact and has not been tampered with. A simple use of such an approach is a paper label that is places over a section of a bottle screw cap, covering both a portion of the removable cap as well as a section of a ring portion that that attached below the removable cap. When the cap is removed it breaks away from the ring portion and the paper label overing the two also breaks. It is then evident by the destroyed/damaged paper label that the cap has been removed and thus potentially the content of the bottle may have been tampered with. A problem with paper seals is that they may easily be recreated, and a fresh paper seal placed over the cap so that it may appear as it has not been removed.

RFID tags integrated into closure members has proved successful. The RFID device may contain information specific to the contents of the container and/or the container history. The RFID has an identifier integrated circuit (IC) and an antenna portion and may transmit information on low frequency, high frequency or UHF, depending on the type of RFID tag used. RFID tags can be passive, working by using the electromagnetic energy transmitted from an RFID reader to transmit information stored within.

An RFID can be incorporated into or onto a plastic closure member, such as a plastic capsule covering a cork or screw closure, and a portion of the antenna may extend along a path that extends down the skirt of the plastic capsule. Removal of the cork or screw cap results in the antenna extending down the skirt of the capsule being broken which can either result in the antenna no longer functions and a defective RFID tag registering upon an attempt to read by the RFID reader, or alternatively the RFID and can transmit, once activated by the RFID reader information regarding the integrity of the cap to the RFID reader.

DE212017000222 discusses a metal lid with an RFID tag, wherein the RFID tag includes: an radio-frequency integrated circuit (RFIC) element disposed in the metal lid, and a loop antenna connected to the RFIC element, and wherein at least a portion of a loop opening of the loop antenna extends in a circumferential direction of the metal lid while being exposed from an opening edge of the opening portion of the metal lid to the outside of the metal lid.

However, whilst readily compatible with plastic capsules, the use of RFID with metal capsules results in issues relating to the shielding properties of the metal that deceases or prevents a signal from being transmitted from the RFID tag as the antenna operates on the basis of electromagnetic fields. One possible solution has been to position the RFID tag antenna on an upper surface of the metal capsule, such as in DE212017000222, so that the metal does not shield the antenna. In such a position however, the antenna is susceptible to inadvertent damage either during transport or product handling which can render the RFID inoperable.

In addition, the positioning of the antenna portion on top of the metallic capsule can result in a capsule having an unclean look with a hump or protuberance on the upper surface.

### SUMMARY OF THE INVENTION

In accordance with a first aspect, the present invention provides a product security capsule for a container according to appended claim 1, including a capsule body having a cap portion and a neck portion and at least one joint portion, wherein there is a gap between the cap portion and a neck portion, the joint portion crossing over the gap and coupled to both the cap portion and the neck portion, a radio frequency identification (RFID) chip, a conductive loop located on an outer surface of the capsule and operatively connected to a RFID chip, the conductive loop having a cap portion, a joint portion, and a neck portion. The cap portion includes an opening surrounded by an inner rim and the antenna portion extends beyond the opening and the inner rim.

In embodiments, the RFID chip is integrated into the cap portion and disposed between a plurality of cap layers.

In embodiments, the conductive loop is frangible.

In embodiments, the conductive loop joint portion is frangible.

In embodiments, the conductive loop is constructed from graphene.

In embodiments, the conductive loop is constructed from graphene paper.

In embodiments, the conductive loop is screen printed onto the capsule body.

In embodiments, the container is a wine bottle.

In embodiments, the product security capsule is a screw cap closure. In preference, the cap portion of the screw cap closure is threaded.

In embodiments, rotation of the cap portion of the screw cap closure operatively detaches the antenna cap portion from the conductive loop neck portion.

In embodiments, the RFID is a passive RFID.

In embodiments, rotation of the cap portion of the screw cap closure operatively detaches the conductive loop cap portion from the conductive loop portion damaging the passive RFID.

In embodiments, rotation of the cap portion of the screw cap closure operatively detaches the conductive loop cap portion from the conductive loop portion causing the RFID to record, be partially disabled or to be completely disabled.

### BRIEF DESCRIPTION OF THE DRAWINGS

Figure 1 is an exploded side view of an embodiment of the present invention;
Figure 2 is a perspective view of figure 1;
Figure 3 is a close up view of the RFID and antenna section of the embodiment in figure 1;
Figure 4 is a close up view of the connection between the conductive loop and RFID circuit;
Figure 5 is a view showing the position of the cover over the RFID antenna
Figure 6 is a perspective view of an assembled capsule

### DESCRIPTION OF THE INVENTION

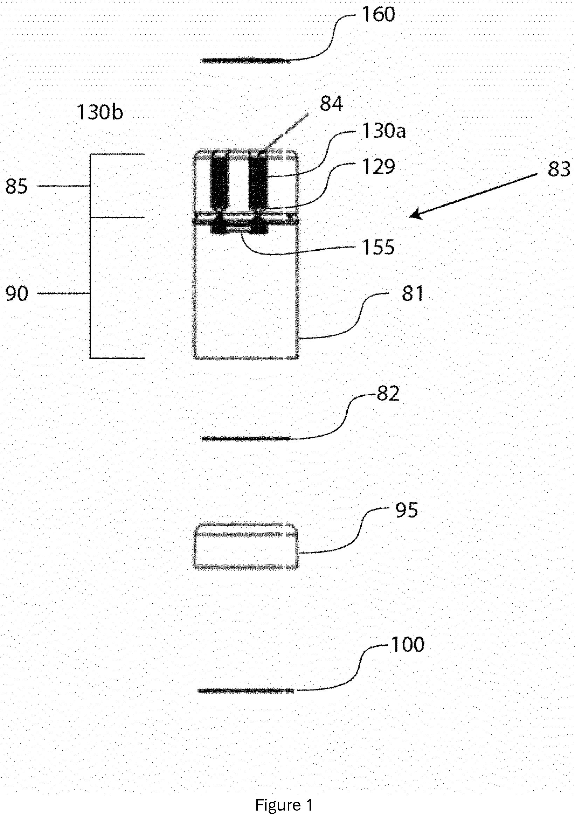

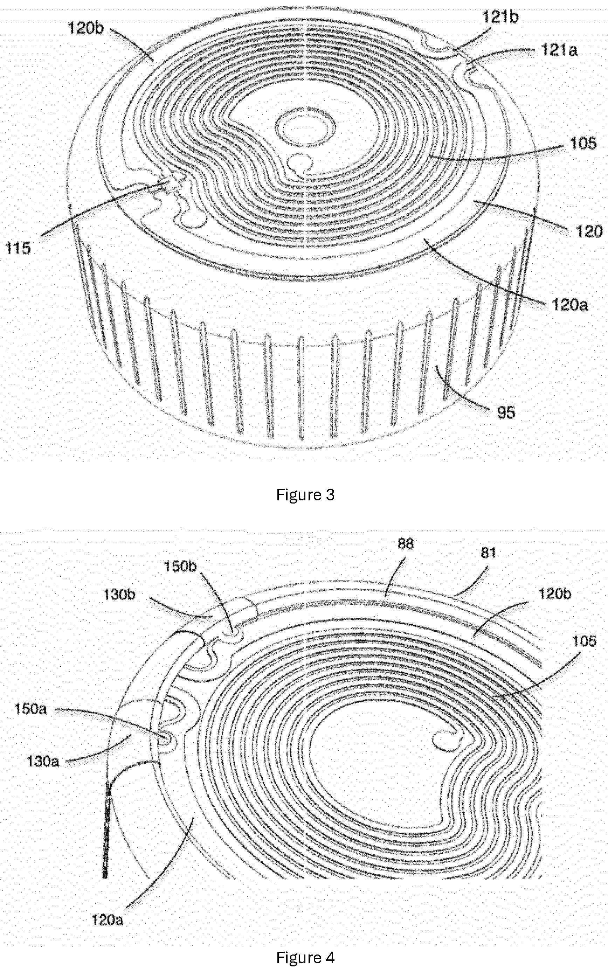

Figures 1 to 6 show an embodiment of the product security capsule 83 where the radio frequency identification (RFID) chip 82 is formed separately to the conductive loop 84, which is formed on the body of the capsule 81. The chip 82 and the conductive loop 84 enter in electrical contact when pressed against each other when the capsule 81is applied to the vessel. The electrical contact can be facilitated by a conductive ink, such as an ink containing a conductive material, such as graphite or silver, conductive polymeric material, or other suitable nanoparticles that are electrically conductive. An example of a conductive ink is PE410 by DuPont.

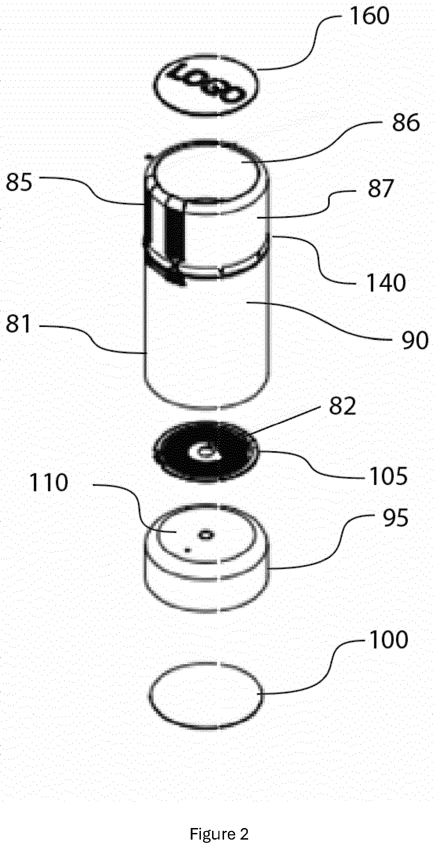

Referring to Fig 1 and 2, the capsule 81 has an upper section 85, or the cap portions 85 that fits a closure element the cap 95, with an opening 86 and a lower section (skirt or neck portion) 90 that covers a neck of a bottle, a closure element 95 being made from a metallic foil material, for example aluminium, having an internal screw thread for mating with an external screw thread on a neck of a container or vessel, a sealing element or liner 100, which is held in place against an opening of the container or vessel and provides a seal to prevent the escape of material from within the vessel when the closure element 95 is fastened to the vessel.

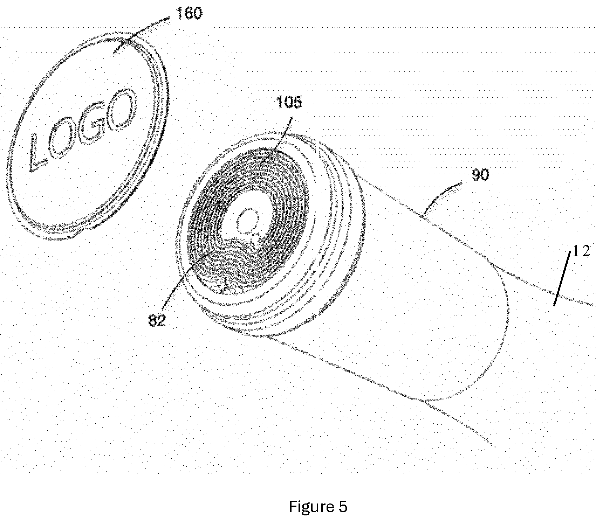

The RFID chip (IC) 82 has an antenna portion 105 located on an upper surface 110 of the closure element 95 which can be seen in figure 5, with the integrated circuit 115 wired to it. There is also an outer section of circuit 120 that has two sections, 120a and 120b that extends substantially about a portion of the upper surface of the closure element 95, terminating at ends 121a and 121b respectively. When located under a capsule 81, at least a portion of the antenna 105 aligns with the opening 86 of the capsule 81 and the two outer sections 120a and 120b are at least partially visible in that they are not fully covered by the inner rim 88 of the opening 86 of the capsule 81.

The capsule 81 has an outer surface 87 with a conductive loop 129 being two conductive tracks 130a and 130b, also referred to as conductive loop cap portions, that pass down a length of an upper section 85, or cap portion, of the capsule 81. The conductive tracks 130a and 130b narrow at 135a and 135b, also referred to as conductive loop joint portions, as they travel over a break line 140 on the capsule 81. The break line 140 being a line of weakness in the capsule 81, which upon rotation of the upper section 85 of the capsule 81 results in a separation of the upper section 85 and lower section 90. The narrow sections 135a and 135b can be placed over the joint portions 145 between the upper section 85 and lower section 90, this prevents accidental damage of the narrow sections 135a and 135b which may be vulnerable to accidental breaking if passing over the gap 145 in the break line 140.

After spanning the break line 140, the conductive tracks 130a and 130b then join together via the joining section 155, also referred to as conductive loop neck portion, to form the conductive loop.

The conductive loop conductive tracks 135a and 135b may be made of any suitable electrically conductive material, for example a suitably conductive thin metal foil material adhered or laminated onto the outer surface 87 of the capsule 81. In other embodiments the conductive loop 129 can be printed onto the outer surface of 87 of the capsule 81 using a suitable conductive ink, for example DuPont PE410, which utilise silver, PEDOT:PSS (poly(3,4-ethylenedioxythiophene) polystyrene sulfonate) a conductive organic thermo electric material, inkjet printable graphene ink (for example 2.4 wt. % (solid (graphene and ethyl cellulose) in cyclohexanone/terpineol). The conductive loop 129, including the conductive tracks, can be made as a separate part that is applied to the outer surface 87 of the capsule 81 prior to any programming of the IC of the RFID. Alternatively, the conductive loop 129, including the conductive tracks, can be applied to the outer surface 87 after programming of the IC has been completed.

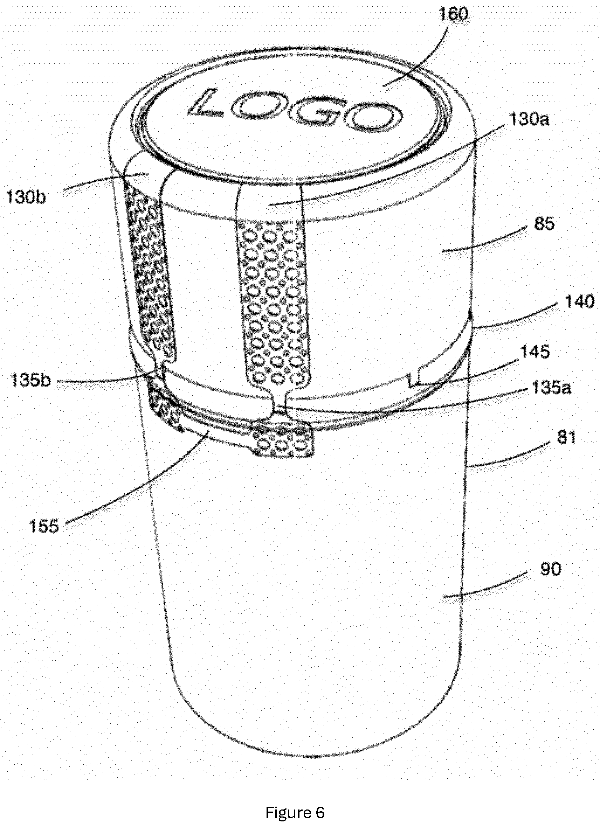

The outer section of circuit 120 that has two sections, 120a and 120b can be operatively connected to the section 135a and 135b of the conductive loop 129 by application of a electrically conductive material, for example an electrically conductive adhesive, at locations 150a, joining to 120a and 150b, joining to 120b. in this way the conducting loop 129 is electrically connected to the RFID. Figure 6 shown an exploded view of the present invention.

The RFID and antenna 105 can then be covered using a suitable cover 160 held in place using a compatible adhesive or similar, as shown in figure 9, so that the RFID is disposed between a number of layers, to produce the covered capsule as shown in figure 10. The antenna 105 is thus protected from accidental impact damage and as at least a portion of the antenna is aligned with the opening 86 of the capsule 81 attenuation of signal being transmitted from the antenna is minimised. The conductive loop 129 can also be covered by a suitable covering material, such as paint to conceal both the presence and location of the conductive loop.

When the cap portion 85 is rotated to open, the frangible narrow sections 135a and 135b of the conductive loop 129 break, as does the joint portions 145 between the cap portion 85 and the skirt (neck portion) 90, and the break can be determined by the RFID chip and transmits to an RFID reader than the integrity of the security capsule has been compromised.

## Claims

1. A product security capsule (83) for a container (12) including
a capsule (81) body having a cap portion (85), a neck portion (90) and at least one joint portion (140),
wherein there is a gap between the cap portion (85) and the neck portion (90), the joint portion (140) crossing over the gap and coupled to both the cap portion (85) and the neck portion (90), wherein the cap portion (85) includes an opening (86) surrounded by an inner rim (88),
a closure element (95) being made from a metallic foil, having an internal screw thread for mating with an external screw thread on a neck of a container or vessel,
a sealing element or liner (100) that is held in place against an opening of a container or a vessel,
a radio frequency identification (RFID) chip (82) including an antenna portion (105) that extends beyond the opening (86) and the inner rim (88),
wherein the RFID chip is located on an upper surface (110) of the closure element (95),
wherein at least a portion of the antenna portion aligns with the opening (86) of the cap portion (85),
wherein the RFID chip is located below the inner rim (88) and is covered by a cover (160) that resides within the opening (86) of the cap portion (85), and
a conductive loop (129) located on an outer surface (87) of the capsule (81) body and operatively connected to the RFID chip, the conductive loop (129) having a cap portion, a joint portion, and a neck portion.

2. The product security capsule (83) of any one of the above claims, wherein the conductive loop (129) is frangible.

3. The product security capsule (83) of any one of the above claims, wherein the conductive loop (129) joint portion is frangible.

4. The product security capsule (83) of any one of the above claims, wherein the conductive loop (129) is constructed from graphene.

5. The product security capsule (83) of any one of the above claims, wherein the conductive loop (129) is constructed from graphene paper.

6. The product security capsule (83) of any one of the above claims, wherein the conductive loop (129) is applied to the capsule (81) body with a conductive material.

7. The product security capsule (83) of any one of the above claims, wherein the container is a bottle.

8. The product security capsule (83) of any one of the above claims, wherein the product security capsule (81) is a screw cap closure.

9. The product security capsule (83) of any one of the above claims, wherein the closure element (95) of the screw cap closure is threaded.

10. The product security capsule (83) of any one of the above claims, wherein the rotation of the closure element (95) of the screw cap closure operatively detaches the conductive loop (129) cap portion from the conductive loop neck portion.

11. The product security capsule (83) of any one of the above claims, wherein the RFID is a passive RFID.

12. The product security capsule (83) of any one of the above claims, wherein the rotation of the cap portion (85) of the screw cap closure operatively detaches the antenna cap portion from the conductive loop (129) portion damaging the passive RFID or causing a break in the circuit.

13. The product security capsule (83) of any one of the above claims, wherein the conductive loop (129) is layered onto an outer surface of the capsule (81) body.

## Patentansprüche

1. Produktsicherheitskapsel (83) für einen Behälter (12), umfassend
einen Kapselkörper (81) mit einem Kappenabschnitt (85), einem Halsabschnitt (90) und mindestens einem Verbindungsabschnitt (140),
wobei zwischen dem Kappenabschnitt (85) und dem Halsabschnitt (90) ein Spalt ausgebildet ist, wobei der Verbindungsabschnitt (140) den Spalt kreuzt und sowohl mit dem Kappenabschnitt (85) als auch dem Halsabschnitt (90) gekoppelt ist, wobei der Kappenabschnitt (85) eine Öffnung (86) aufweist, die von einem inneren Rand (88) umgeben ist,
ein Verschlusselement (95), das aus einer Metallfolie hergestellt ist, mit einem Innengewinde zum Zusammenpassen mit einem Außengewinde an einem Hals eines Behälters oder Gefäßes,
ein Dichtungselement oder eine Auskleidung (100), das/die an einer Öffnung eines Behälters oder eines Gefäßes gehalten wird,
einen Hochfrequenzidentifikations-(RFID-)Chip (82) mit einem Antennenabschnitt (105), der sich über die Öffnung (86) und den inneren Rand (88) hinaus erstreckt, wobei sich der RFID-Chip auf einer oberen Fläche (110) des Verschlusselements (95) befindet, wobei mindestens ein Abschnitt des Antennenabschnitts mit der Öffnung (86) des Kappenabschnitts (85) ausgerichtet ist,
wobei sich der RFID-Chip unterhalb des inneren Rands (88) befindet und durch eine Abdeckung (160) abgedeckt ist, die innerhalb der Öffnung (86) des Kappenabschnitts (85) liegt, und
eine leitende Schleife (129), die sich auf einer Außenfläche (87) des Kapselkörpers (81) befindet und mit dem RFID-Chip operativ verbunden ist, wobei die leitende Schleife (129) einen Kappenabschnitt, einen Verbindungsabschnitt und einen Halsabschnitt aufweist.

2. Produktsicherheitskapsel (83) nach einem der obigen Ansprüche, wobei die
leitende Schleife (129) zerbrechlich ist.

3. Produktsicherheitskapsel (83) nach einem der obigen Ansprüche, wobei der
Verbindungsabschnitt der leitenden Schleife (129) zerbrechlich ist.

4. Produktsicherheitskapsel (83) nach einem der obigen Ansprüche, wobei die
leitende Schleife (129) aus Graphen aufgebaut ist.

5. Produktsicherheitskapsel (83) nach einem der obigen Ansprüche, wobei die
leitende Schleife (129) aus Graphenpapier aufgebaut ist.

6. Produktsicherheitskapsel (83) nach einem der obigen Ansprüche, wobei die
leitende Schleife (129) mit einem leitfähigen Material auf den Kapselkörper (81) aufgebracht ist.

7. Produktsicherheitskapsel (83) nach einem der obigen Ansprüche, wobei der
Behälter eine Flasche ist.

8. Produktsicherheitskapsel (83) nach einem der obigen Ansprüche, wobei die
Produktsicherheitskapsel (81) ein Schraubverschluss ist.

9. Produktsicherheitskapsel (83) nach einem der obigen Ansprüche, wobei das
Verschlusselement (95) des Schraubverschlusses mit einem Gewinde versehen ist.

10. Produktsicherheitskapsel (83) nach einem der obigen Ansprüche, wobei die
Drehung des Verschlusselements (95) des Schraubverschlusses den Kappenabschnitt der leitenden Schleife (129) operativ von dem Halsabschnitt der leitenden Schleife löst.

11. Produktsicherheitskapsel (83) nach einem der obigen Ansprüche, wobei die
RFID eine passive RFID ist.

12. Produktsicherheitskapsel (83) nach einem der obigen Ansprüche, wobei die
Drehung des Kappenabschnitts (85) des Schraubverschlusses den Antennenkappenabschnitt operativ von dem Abschnitt der leitenden Schleife (129) löst, wodurch die passive RFID beschädigt oder eine Unterbrechung im Stromkreis verursacht wird.

13. Produktsicherheitskapsel (83)
nach einem der vorstehenden Ansprüche, wobei die
leitenden Schleife (129) auf eine Außenfläche des Kapselkörpers (81) aufgebracht ist.

## Revendications

1. Capsule de sécurité de produit (83) pour un récipient (12) comportant
un corps de capsule (81) ayant une portion de capuchon (85), une portion de col (90) et au moins une portion de joint (140),
dans laquelle il existe un espace entre la portion de capuchon (85) et la portion de col (90), la portion de joint (140) traversant l'espace et étant couplée à la fois à la portion de capuchon (85) et à la portion de col (90), dans laquelle la portion de capuchon (85) comporte une ouverture (86) entourée par un rebord intérieur (88),
un élément de fermeture (95) étant composé d'une feuille métallique, ayant un filet de vis interne pour s'accoupler avec un filet de vis externe sur un col d'un récipient ou d'un flacon,
un élément d'étanchéité ou revêtement (100) qui est maintenu en place contre une ouverture d'un récipient ou d'un flacon,
une puce d'identification par radiofréquence (RFID) (82) comportant une portion d'antenne (105) qui s'étend au-delà de l'ouverture (86) et du rebord intérieur (88),
dans laquelle la puce RFID est située sur une surface supérieure (110) de l'élément de fermeture (95), dans laquelle au moins une portion de la portion d'antenne est alignée avec l'ouverture (86) de la portion de capuchon (85),
dans laquelle la puce RFID est située sous le rebord intérieur (88) et est recouverte par un couvercle (160) qui se trouve au sein de l'ouverture (86) de la portion de capuchon (85), et
une boucle conductrice (129) située sur une surface extérieure (87) du corps de capsule (81) et reliée de manière fonctionnelle à la puce RFID, la boucle conductrice (129) ayant une portion de capuchon, une portion de joint et une portion de col.

2. Capsule de sécurité de produit (83) selon l'une quelconque des revendications ci-dessus, dans laquelle
la boucle conductrice (129) est frangible.

3. Capsule de sécurité de produit (83) selon l'une quelconque des revendications ci-dessus, dans laquelle
la portion de joint de la boucle conductrice (129) est frangible.

4. Capsule de sécurité de produit (83) selon l'une quelconque des revendications ci-dessus, dans laquelle
la boucle conductrice (129) est réalisée en graphène.

5. Capsule de sécurité de produit (83) selon l'une quelconque des revendications ci-dessus, dans laquelle
la boucle conductrice (129) est réalisée en papier de graphène.

6. Capsule de sécurité de produit (83) selon l'une quelconque des revendications ci-dessus, dans laquelle
la boucle conductrice (129) est appliquée sur le corps de capsule (81) avec un matériau conducteur.

7. Capsule de sécurité de produit (83) selon l'une quelconque des revendications ci-dessus, dans laquelle
le récipient est une bouteille.

8. Capsule de sécurité de produit (83) selon l'une quelconque des revendications ci-dessus, dans laquelle
la capsule de sécurité de produit (81) est une fermeture à capuchon vissé.

9. Capsule de sécurité de produit (83) selon l'une quelconque des revendications ci-dessus, dans laquelle
l'élément de fermeture (95) de la fermeture à capuchon vissé est fileté.

10. Capsule de sécurité de produit (83) selon l'une quelconque des revendications ci-dessus, dans laquelle
la rotation de l'élément de fermeture (95) de la fermeture à capuchon vissé détache de manière fonctionnelle la portion de capuchon de la boucle conductrice (129) de la portion de col de la boucle conductrice.

11. Capsule de sécurité de produit (83) selon l'une quelconque des revendications ci-dessus, dans laquelle
la RFID est une RFID passive.

12. Capsule de sécurité de produit (83) selon l'une quelconque des revendications ci-dessus, dans laquelle
la rotation de la portion de capuchon (85) de la fermeture à capuchon vissé détache de manière fonctionnelle la portion de capuchon d'antenne de la portion de boucle conductrice (129) endommageant la RFID passive ou provoquant une rupture dans le circuit.

13. Capsule de sécurité du produit (83) selon l'une quelconque des revendications ci-dessus, dans laquelle
la boucle conductrice (129) est disposée en couches sur une surface extérieure du corps de capsule (81).
